(19) Europäisches Patentamt
European Patent Office
Office européen des brevets

(11) **EP 3 376 182 A1**

(12) **EUROPEAN PATENT APPLICATION**

(43) Date of publication:
**19.09.2018 Bulletin 2018/38**

(51) Int Cl.:
**G01F 22/00** (2006.01)      **G01F 22/02** (2006.01)
**G01F 11/28** (2006.01)      **B01L 3/02** (2006.01)

(21) Application number: **17160725.2**

(22) Date of filing: **14.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **CSEM**
**Centre Suisse d'Electronique et de Microtechnique SA**
**2002 Neuchâtel (CH)**

(72) Inventors:
• **GOLDOWSKY, Jonas**
  **6030 Ebikon (CH)**
• **SCHMID, Noa**
  **6010 Kriens (CH)**
• **F. GRAF, Siegfried**
  **6010 Kriens (CH)**
• **KNAPP, Helmut**
  **6030 Ebikon (CH)**

(74) Representative: **Gevers SA**
**Rue des Noyers 11**
**2000 Neuchâtel (CH)**

(54) **FLUID DISPENSING SYSTEM AND METHOD**

(57)    The present invention relates to an apparatus (1) and method for precisely dispensing or aspirating liquid fluid from a container. The apparatus (1) comprises: at least one connecting port (6) for connecting the apparatus to the container in a gas and liquid tight manner; a dispensing unit (8), having a dispensing channel (81) and liquid flow controlling means (83) to open /close said channel respectively; and a metering unit (7) having a gas feedthrough channel (71) with a first end extending in a gas containing part of the chamber (3) and a second end opposite the first end extending outside the chamber (3), the metering unit (7) further comprising a flow sensing assembly (72) configured to measure gas flow within the gas feedthrough channel (71) and to calculate the container fill level and the dispensed amount of liquid after aspiration or dispensing thereof from the chamber.

Fig. 2

## Description

## Technical field

The present invention relates to the field of precision metering and dispensing of liquid fluids. More specifically the invention provides a liquid dispensing and metering system and method a dispensed liquid volume is measured and/or controlled by measurement of a gas volume and/or flow in and from a liquid container.

## Prior art

Fluid dispensing is a critical process in a broad range of applications, including medical and biomedical applications, but also industrial applications, where precise dispensing of metered amounts of liquid fluids is required.

An industrially widely used dispensing approach is "Time Pressure Dispensing" (TPD). TPD is a method of dispensing liquid materials (surface mount adhesives and gasketing materials) that uses air pressure applied to the top of a syringe to force material through a needle. The amount of time the air pressure is applied is directly related to the amount of adhesive dispensed. Common time pressure dispensing setups are easily implemented. However, TPD allows no feedback of the liquid dispensed during the dispensing cycle. Especially syringe fill-level, viscosity of the medium, syringe to syringe variation and clogging are influencing the amount of liquid dispensed. Measures to account for those disturbance variables are matter of current research activities. (Dixon 2004; Chen et al. 2007)

In biomedical and laboratory applications most often volume defined pumps are used. Syringe pumps allow precise dispensing of small volumes. However, they are expensive and bulky. Alternatively, peristaltic pumps, smaller and lower in cost, can be used which create a pulsating flow, which can be problematic in many applications. Generally all pumping mechanisms can be used and observed with a flowmeter within the liquid path. However, a flowmeter in liquid communication itself often has to be calibrated and gives output correlating with the media physical properties such as viscosity.

To improve upon the previously described limitations of existing dispensing systems such as TPD systems, the described invention adds the possibility of dispensed volume feedback.

## Disclosure of the invention

According to the present invention there is provided a fluid dispensing or aspirating apparatus as defined in claim 1 for dispensing or aspirating a predetermined volume of liquid fluid in a container comprising a chamber having an internal volume V and at least an opening for granting communication with the chamber.

The apparatus of the invention comprises:

at least one connecting port for connecting the apparatus to the container about the opening in a gas and liquid tight manner, and

a dispensing unit for dispensing and/or aspirating said a predetermined volume of liquid fluid from the chamber, said dispensing unit comprising a dispensing channel having a first end in fluidic communication with a liquid containing part of the chamber and a second end opposite the first end extending outside the container for dispensing a metered amount of liquid fluid, liquid flow controlling means being arranged on the dispensing channel to open /close said channel respectively or actively pump said liquid, and

a metering unit for metering a compressible gas flow injected or released from the chamber,

said dispensing unit and metering unit being in fluidic communication with said chamber through said at least one connecting port.,

The apparatus is characterized in that the metering unit comprises a gas feedthrough channel having a first end in fluidic communication with a gas containing part of the chamber and a second end opposite the first end extending outside the chamber, the metering unit further comprising a flow sensing assembly configured to measure a gas flow V within the gas feedthrough channel and to introduce or release a determined volume of gas in the chamber after a controlled volume of liquid has been aspirated in or dispensed from the chamber.

The invention further relates to a method for dispensing or aspirating liquid as defined in claim 9.

Said method comprises the steps of:

- providing a container comprising a chamber having an internal volume V and an opening for granting communication with the chamber, said chamber comprising a volume V1 of a liquid fluid and a volume V2 of a compressible gas, such that, when said chamber is closed V=V1+V2;

- providing an apparatus as previously described

- connecting the apparatus to the opening of the chamber by means of the connecting port such that a first end of the gas feedthrough channel extends in a gas containing part of the chamber and the second end of the gas feedthrough channel extends outside the chamber, and such that the first end of the dispensing channel extends in the liquid contained in the chamber and the second end of the dispensing channel extends outside the container, and

- opening the liquid flow controlling means in the dispensing channel and closing it after a predetermined time

- metering the induced flow from the pressure source or ambient pressure into the chamber and observing the form of the gas flow profile

- calculating container fill level Vgas and dispensed amount of liquid.

Various preferred features of both the apparatus of the invention are defined in the dependent claims.

**Presentation of drawings**

Examples of the present invention will now be described with reference to the accompanying drawings, in which :

- Figures 1A represents schematically a first embodiment of a dispensing system according to the invention

- Figure 1B represents a variant of the dispensing system of figure 1A, wherein the dispensing unit comprises a pump in lieu of the valve of Figure 1A

- Figure 2 represents an embodiment of a dispensing system according to the variant of Fig 1B, comprising a differential pressure sensor instead of the two pressure sensors.

- Figure 3 is a plot of the differential pressure sensor signal in the device of fig. 2 (in communication with gas volume of the container) as function of time for two different fill levels of an arbitrary container;

- Figure 4 is a plot of the differential pressure sensor signal of the device of fig. 2 as function of container fill level and dispensed volume, gravimetrically verified

**Description of prefered embodiments**

The present invention provides a liquid fluid dispensing or aspirating apparatus 1 and a method for dispensing or aspirating metered controlled amounts of a liquid 2 contained in an arbitrary container 4 together with a compressible gas 5 relying on the recovery of the internal pressure of the compressible gas 5 towards the externally applied pressure and the gas flow caused thereby through a flow sensing assembly 72. The invention enables the precise dispensing and aspiration of liquids and is independent of the liquids viscosity.

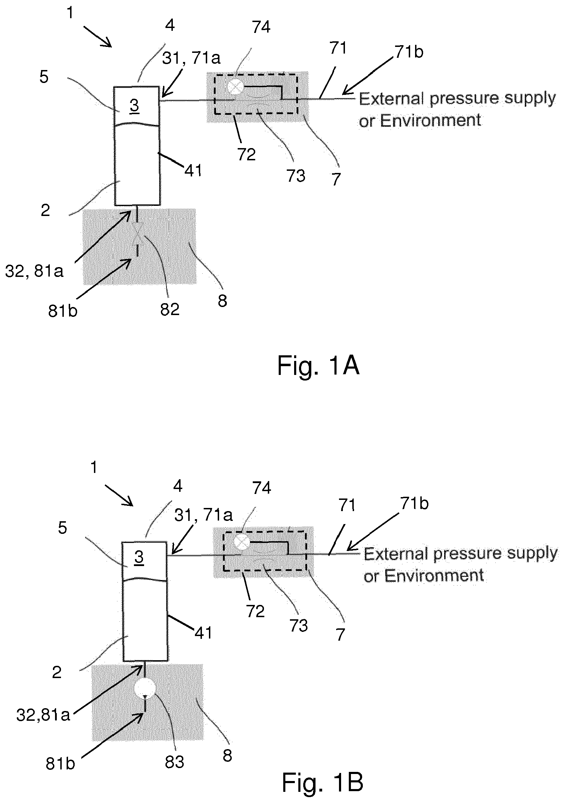

The liquid 2 fill-level in the container 4 can be metered and the accuracy of the dispensed or aspirated volumes can be metered and adjusted for future dispense cycles (i.e. correction of time for next TPD cycle). In addition, real-time adjustment of a current dispensing cycle can be achieved through detailed analysis of the flow profile measured with the flow sensing assembly. In case of a pressure driven system (Fig. 1A) the created flow of liquid 2 dispensed or aspirated in the chamber 3 of the container 4 is pulsation free. No flow sensor gets in contact with the liquid 2 to be dispensed or aspirated.

The dispensing or aspiration apparatus 1 of the invention comprises at least a connection port 6, a metering unit 7 and a dispensing unit 8. The connection port 6 is adapted to allow an air and liquid tight connection of the apparatus 1 to the chamber 3 through an opening 31 arranged in the container's wall 41.

The container 4 is defined as arbitrary in that it does not need to be known in advance, neither the volume V of the chamber 3 delimited in the container 4. Said container 4 can thus be of any container or bottle of unknown internal volume. The only required feature for the container 4 is that its walls 41, no matter the material they're made of, are stiff enough to prevent deformation under the pressure differences caused by the dispensing method. In other words, deformable plastic bottles or vials of blow-molded polyethylene do not form good enough candidates for carrying out the invention. Hard plastic cans or bottles are therefore preferred, as well as glass containers, which present the least contamination risk with the liquid to be contained and dispensed.

The internal chamber 3 of the container 4 is filled with a volume V1 of liquid and a volume V2 of gas, which remains in equilibrium in the chamber such that the volume V of the chamber is such that V=V1 +V2. The liquid 2 being denser that the gas 5 it fills up the bottom part of the chamber 3 of the container while the gas fills up the remaining top part of the chamber 3, as shown in the figures.

According to the invention it is not necessary to know any of the volumes V, V1, V2 to carry out metered dispensing of aliquots of liquid 2 from the container 4 through the connection port 6 using the metering unit 7 and dispensing unit 8.

The metering unit 7 comprises a gas feedthrough channel 71 having a first end 71a connected to a gas containing part of the chamber 3 and a second end 71b which is either open to atmosphere or connected to an internal or external pressure supply (positive or negative pressure). The metering unit 7 further comprises a flow sensing assembly 72 configured to measure a gas pressure differential $\Delta$p and/or gas flow $\dot{V}$ within the gas feedthrough channel 71 while externally applied pressure is recovered within the container 4 during and after a dispensing cycle is performed.

In a first embodiment the flow sensing assembly 72 also comprises at least a restrictor 73 arranged on said compressible gas feedthrough channel 71 in between its two ends 71a, 71b. In addition, the flow sensing assembly 72 comprises at least one differential pressure sensor 74 connected before and after the restrictor 73.

The differential pressure sensor 74 is preferably chosen to be of low-millibar or sub-millibar range, to provide fast dynamic response of the metering unit with extremely low pressure variations upon dispensing or aspirating, i.e. small gas flow over the restrictor 73.

Preferably the restrictor 73 is adapted to the differential pressure sensor 74 sensitivity, i.e. creating a pressure drop that gives a targeted resolution of the flow, but does not limit the pressure recovery within the container significantly.

Alternatively the flow sensing assembly 72 may comprise a gas flow sensor in lieu of the restrictor 73 and differential pressure sensor 74. In such case, any kind of gas flow sensor could be used.

In operative electrical connection with the differential pressure sensor 74, or the flow sensor the flow sensing assembly 72 also comprises electronic control means capable of receiving electrical signals from the previously mentioned sensors and computing therefrom volumes of liquids to be dispensed or aspirated as well as the fill level of the container. The electronic control means may comprise a battery and an integrated circuit, or ASIC embedded with a computer program designed to run all necessary computation from signal received from the sensors of the metering unit and further trigger dispensing or aspiration of liquid from or in the chamber respectively in connection with the dispensing unit.

Said dispensing unit 8 is composed of at least dispensing channel 81 having a first end 81a in communication or extending in the liquid 2 in the chamber 3 and a second end 81 b open to atmosphere or connected to a secondary containment, either for receiving aliquots of liquid 2 dispensed in said containment or forming a liquid reservoir from which liquid is aspirated to the chamber. In addition the dispensing unit 8 also comprises one of a dispensing valve 82 (fig. 1A) or a pump 83 (fig. 1B) or a combination of them. Such valve 82 or pump 83 is operatively connected with the electronic control means of the metering unit 7, which actuates said valve or pump in order to open and close the dispensing channel in order to let liquid flow therethrough for dispensing or aspirating as necessary according to a process as defined below.

The compressible gas 5 volume and thereby the fill level of the container may be unknown when the apparatus 1 is activated. The apparatus 1 however allows for dispensing controlled volumes of liquids through the dispensing channel 81 only relying on the metering the gas flow V over the restrictor 73.

Indeed, measurements of the gas flow $\dot{V}$ (or pressure difference $\Delta p_{max}$) over the restrictor 73, i.e. by means of the differential pressure sensor 74 signal, upon dispensing of identical liquid volumes at various filling levels for a same container 4 and plotting of the corresponding curves over time results shows that said curves are analogous, with only the intensity of the peak corresponding to the bottle fill level and the area under said curves corresponding to the dispensed liquid volume.

Accordingly, after proper calibration process of the apparatus and plotting a number of curves for various filling levels of a container it is then possible to meter the compressible gas volume in the container 4 for any given filling level in routine measurements.

Through this gas volume measurement principle, it is possible for a user to be warned if the liquid volume is used up because absence of liquid will automatically be detected in the gas flow signal.

In addition, the gas volume measured in the container can also be used as an indicator of the accuracy of the dispensed or aspirated volumes. Indeed, the more constant the gas flow V signal from the differential pressure sensor 74 is over time, the more precise and repetitive the dispensing of accurate aliquots of liquid from the container is carried out. The inventors have however determined that the gas volume in the container 4 should not be bigger than 40'000 times the dispensed or aspirated volumes of liquid for the dispensing process to be sufficiently accurate.

The dispensing or aspirating of aliquots of liquid using the apparatus of the invention requires opening of the dispensing channel 81 through actuation of the valve 82 or pump 83 to allow liquid to flow from the chamber 3 in said channel by gravity and/or gas pressure effect on the liquid inside the chamber, where necessary through external pressurization.

To calculate the volume of liquid dispensed or aspirated $V_l$ the time integral of the gas flow $\dot{V}$ is taken, as follows.

$$V_l = \int \dot{V}\,(\mathrm{dp})\mathrm{dt} \quad (1)$$

The gas flow $\dot{V}$, which can be defined as $V \sim dp(t)$ (2) is proportional to the differential pressure dp(t) over the restrictor 73.

In other words, the apparatus 1 of the invention allows for precisely metering and dispensing (or aspirating) of aliquots of liquids having a volume $V_l$ without having any active element, in particular sensor or any other metering device or arrangement in the dispensing unit, in particular in the dispensing channel 81. Volume $V_l$ is essentially controlled through the integration of the gas flow measured in the gas feedthrough channel 71 during each dispensing cycle, which gives an image of the volume of liquid dispensed. It must be noted that in the case of high viscosity liquids it may be preferable to mount a pump 83 or a valve 82 not in the dispensing channel 81 but rather in the gas feedthrough channel 71 to pressurize the chamber 3 with the compressible gas 5 in order to push liquid through the dispensing channel 81 rather than letting it flow as with less viscous liquids.

Further, the apparatus 1 of the invention also allows for building a manifold dispenser/aspirator. In such case, either the metering unit 7 is used commonly for all compartments of the manifold or each supply line towards the compartments has its own differential pressure sensors (higher cost but also higher dispensing accuracy) but a common, shared, electronic control means.

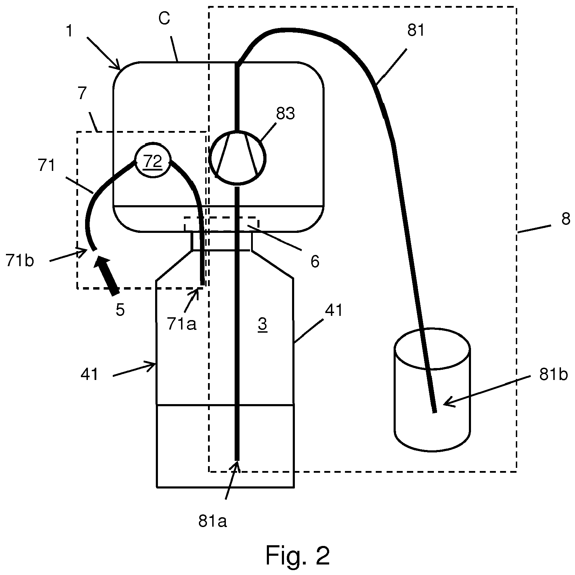

Fig. 2 represents an example of an integrated apparatus 1 according to the invention mounted on a laboratory vial 4 defining a chamber 3 of total volume V containing a volume V1 of water as a liquid to be dispensed and a volume V2 of air as a compressible gas 5. A metering unit 7 and a dispensing unit 8 are integrated in a same casing C, which is fitted on the top opening of the vial 4 by screwing screwable connection port 6, like a lid of a bottle. Two tubes are used for forming the gas feedthrough channel 71 and dispensing channel 81, each having a first end open to the environment outside the vial 4 and a second end extending in the vial 4 through the casing C and connection port 6, the second end of the dispensing channel extending deeper in the vial until its bottom to plunge into a liquid contained in the internal chamber 3 of the vial while the second end of the gas feedthrough channel 71 extends in the top gas containing part of the chamber 3. As previously described for figure 1A and 1 B the gas feedthrough channel 71 goes through a flow sensing assembly 72 comprising a differential pressure sensor and restrictor while the dispensing channel 81 goes through a pump 83.

In order to pump a wide variety of liquids the tubes forming the dispensing channel 81 is made out of polytetrafluoroethylene (PTFE) and the pump 83 parts in contact with the liquid are very chemically resistant PVDF polymer and FFPM elastomer.

The differential pressure sensor sensitivity plays an important role versus the dimensions of the restrictor. Indeed, the more sensitive the differential pressure sensor the less resistant, i.e. narrow, the restrictor can be chosen, and therefore the faster the system's response time.

In the example of Fig. 2 the flow of air flowing into the vial 4 not only depends on the dispensed amounts of liquid, but also on the liquid filling level of the chamber 3 in the vial 4. Thus, using this apparatus 1 of the invention, one can not only determine the air flow-rate over the restrictor, but also the liquid level in the chamber 3.

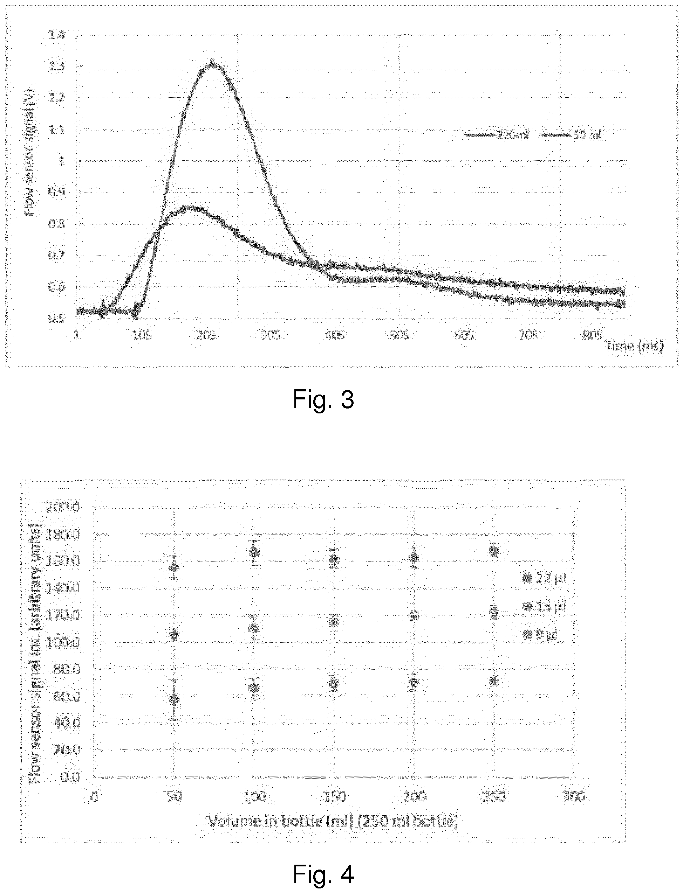

Fig. 3 represents curves of the air flow-rate signal obtained with the apparatus 1 upon dispensing of aliquots of 9 $\mu$l out of a 250 ml glass vial 4 at two different liquid filling levels of 50 ml and 220 ml respectively.

While the peak signal is higher at higher filling level, the integrated signal is approximately the same, and is directly linear to the liquid amount dispensed, as can be seen in Fig. 4, where for any measurement point the same amounts of liquid (9 $\mu$l, 15 $\mu$l, 22 $\mu$l; verified gravimetrically) were dispensed out of the vial 4 fifty times and each corresponding flow-rate signal was integrated.

In general, the measurement accuracy of the dispensing method of the invention increases with the amount of liquid dispensed and the liquid level in the vial 4. In any case, very small relative liquid amounts (<0.004% of total chamber 3 volume) can be detected using the apparatus 1 of the invention and corresponding dispensing method as shown in figure 3.

These apparatus and method are also applicable for liquids with a high vapor pressure as well as high viscosity liquids, i.e. liquids having a $\mu$ of more than 0.01 Pa.s or more than 10 centipoise. Furthermore, most dispensing procedures happen in a relatively short period of time, where the amount of vapor leaving the container 4 can be neglected, even if any vapor generated was not compensated for.

The apparatus 1 and method of the invention provide the following advantages over existing TPD systems:

- Reduced size of dispensing apparatus with additional control compared to "TPD" processes;

- Combination of volume measurement and dispensing with only one differential pressure sensor 74 (or gas flow sensor)

- Online dispensing feedback in "TPD" applications by measuring the gas flow into the tank

- Filling level feedback by analysing the pressure levels of the gas flow into the tank

- Metered dispensing of aggressive media possible

- Active sensing element is being positioned in the less critical gas path and not in the liquid dispensing channel

- Dispensing is independent from liquid viscosity and partial clogging

- The gas flow compensating the dispensed liquid in the container 4 is measured and therefore gives a direct feedback of the dispensed liquid

- Reduced costs and space requirements especially in manifold setups,

- High system pressures possible

Any existing TPD systems (system with liquid tank, liquid valve, pressurized gas to move liquid) can be equipped with a metering unit 7 as taught by the present invention in the gas supply line. The induced flow profile gives feedback about the gas volume in the liquid container (fill level) and the amount of compressible gas flown into the liquid container is equal to the dispensed liquid volume.

Using the feedback of the dispensed liquid volume, the apparatus' accuracy is independent of partial clogging, viscosity or temperature changes of the liquid being dispensed (or aspired) as well as that of the compressible gas in the container..

**Claims**

1. Apparatus (1) for dispensing or aspirating a predetermined volume of liquid fluid (2) in a container (4), said container (4) comprising a chamber (3) having an internal volume V and at least an opening (31, 32) for granting communication with the chamber (3), the apparatus comprising :

   - At least one connecting port for connecting the apparatus to the container about the opening (31, 32) in a gas and liquid tight manner, and
   - a dispensing unit (8) for dispensing and/or aspirating said a predetermined volume of liquid fluid (2) from the chamber (3), said dispensing unit (8) comprising a dispensing or aspirating channel (81) having a first end (81a) in fluidic communication with a liquid containing part of the chamber (3) and a second end (82b) opposite the first end extending outside the container for dispensing or aspirating a metered amount of liquid fluid, liquid flow controlling means (82, 83) being arranged on the dispensing or aspirating channel (81) to open /close said channel respectively, and
   - a metering unit (7) for metering a flow of compressible gas (5) injected or released from the chamber (3),
   - said dispensing unit (8) and metering unit (7) being in fluidic communication with said chamber (3) through said at least one connecting port,

   **characterized in that** the metering unit (7) comprises a gas feedthrough channel (71) having a first end (71a) in fluidic communication with a gas containing part of the chamber (3) and a second end (71 b) opposite the first end extending outside the chamber (3), the metering unit (7) further comprising a flow sensing assembly (72) configured to measure gas flow $\dot{V}$ within the gas feedthrough channel (71) and to calculate the container fill level $V_{gas}$ and dispensed amount of liquid after aspiration or dispensing thereof from the chamber.

2. Apparatus according to claim 1, **characterized in that** the flow sensing assembly (72) comprises at least a restrictor (73) arranged on said compressible gas feedthrough channel (71) in between its two ends (71a, 71b).

3. Apparatus according to claim 2, **characterized in that** the flow sensing assembly (72) comprises a differential pressure sensor connected before and after the restriction (73).

4. Apparatus according to claim 1, **characterized in that** the flow sensing assembly (72) comprises gas flow sensor.

5. Apparatus according to claim 3 or 4, **characterized in that** the flow sensing assembly (72) comprises electronic control means in operative electrical connection with the dispensing unit (8).

6. Apparatus according to claim 5, **characterized in that** the electronic control means receive signals from the pressure sensor (74) or gas flow sensor.

7. Apparatus according to any preceding claim, **characterized in that** the dispensing unit (8) comprises a pump (83) or valve (82) branched in between the two ends of the dispensing channel (81).

8. Method for dispensing or aspirating a predetermined volume of fluid (F), comprising the steps of:

   - providing a container (4) comprising a chamber (3) having an internal volume V and an opening for granting communication with the chamber (3), said chamber comprising a volume V1 of a liquid fluid and a volume V2 of a compressible gas, such that, when said chamber is closed V=V1+V2;
   - providing an apparatus (1) according to any preceding claim,
   - connecting the apparatus (1) to the opening of the chamber (3) by means of the connecting port (6) such that a first end of the gas feedthrough channel (71) extends in a gas containing part of the chamber (3) and the second end of the gas feedthrough channel (71) extends outside the chamber (3), and such that the first end of the dispensing or aspirating channel (81) extends in the liquid (2) contained in the chamber (3) and the second end of the dispensing or aspirating channel (81) extends outside the container(4), and
   - activating or opening the liquid flow controlling means in the dispensing or aspirating channel (81) and deactivating or closing it after a predetermined time,
   - metering the induced flow from the pressure source or ambient pressure into the chamber (3) and observing the form of the gas flow profile
   - calculating container fill level $V_{gas}$ and dispensed amount of liquid.

Fig. 1A

Fig. 1B

Fig. 2

Fig. 3

Fig. 4

Europäisches
Patentamt

European
Patent Office

Office européen
des brevets

# EUROPEAN SEARCH REPORT

Application Number

EP 17 16 0725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 043 156 A1 (SUISSE ELECTRONIQUE MICROTECH [CH]) 13 July 2016 (2016-07-13) * paragraphs [0013], [0030] - [0033], [0040] - [0056]; claims 1, 4; figures 1, 4 * | 1-7 | INV. G01F22/00 G01F22/02 ADD. G01F11/28 B01L3/02 |
| X | US 2016/193619 A1 (DES JARDINS STEPHEN R [US] ET AL) 7 July 2016 (2016-07-07) * paragraphs [0026] - [0065]; figures 3, 4 * | 1-8 | |
| X | EP 2 053 014 A1 (HOSHIZAKI ELECTRIC CO LTD [JP]) 29 April 2009 (2009-04-29) * paragraphs [0007] - [0026]; figures 1, 6 * | 1-4,7,8 | |
| A | EP 0 351 995 A2 (ICI PLC [GB]; UNIV MANCHESTER [GB]; FIELDEN PETER ROBERT [GB]) 24 January 1990 (1990-01-24) * column 1, line 50 - column 3, line 46; figures 5, 7 * | 3 | |
| A | EP 2 489 992 A1 (SUISSE ELECTRONIQUE MICROTECH [CH]) 22 August 2012 (2012-08-22) * abstract * | 3 | TECHNICAL FIELDS SEARCHED (IPC) G01F B01L |
| A | US 2014/138400 A1 (DONNER JOSEPH E [US] ET AL) 22 May 2014 (2014-05-22) * paragraphs [0019] - [0024]; figure 1 * | 1-8 | |

The present search report has been drawn up for all claims

| Place of search | Date of completion of the search | Examiner |
|---|---|---|
| The Hague | 6 September 2017 | Myrillas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 16 0725

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2017

| Patent document cited in search report | | Publication date | Patent family member(s) | | Publication date |
|---|---|---|---|---|---|
| EP 3043156 | A1 | 13-07-2016 | EP | 3043156 A1 | 13-07-2016 |
| | | | US | 2016193615 A1 | 07-07-2016 |
| US 2016193619 | A1 | 07-07-2016 | US | 2016193619 A1 | 07-07-2016 |
| | | | US | 2017128976 A1 | 11-05-2017 |
| | | | WO | 2016111848 A2 | 14-07-2016 |
| EP 2053014 | A1 | 29-04-2009 | EP | 2053014 A1 | 29-04-2009 |
| | | | JP | 5139290 B2 | 06-02-2013 |
| | | | JP | WO2008010454 A1 | 17-12-2009 |
| | | | US | 2009194564 A1 | 06-08-2009 |
| | | | WO | 2008010454 A1 | 24-01-2008 |
| EP 0351995 | A2 | 24-01-1990 | DE | 68905698 D1 | 06-05-1993 |
| | | | DE | 68905698 T2 | 08-07-1993 |
| | | | EP | 0351995 A2 | 24-01-1990 |
| | | | JP | H02154154 A | 13-06-1990 |
| | | | US | 5156814 A | 20-10-1992 |
| EP 2489992 | A1 | 22-08-2012 | EP | 2489992 A1 | 22-08-2012 |
| | | | US | 2012211517 A1 | 23-08-2012 |
| US 2014138400 | A1 | 22-05-2014 | CN | 104812500 A | 29-07-2015 |
| | | | EP | 2922640 A1 | 30-09-2015 |
| | | | JP | 2016504181 A | 12-02-2016 |
| | | | KR | 20150086276 A | 27-07-2015 |
| | | | US | 2014138400 A1 | 22-05-2014 |
| | | | US | 2014353333 A1 | 04-12-2014 |
| | | | US | 2016288156 A1 | 06-10-2016 |
| | | | WO | 2014081536 A1 | 30-05-2014 |

EPO FORM P0459

For more details about this annex : see Official Journal of the European Patent Office, No. 12/82